# EUROPEAN PATENT APPLICATION

(11) **EP 3 111 810 A1**
(43) Date of publication of application: **04.01.2017**
(21) Application number: 14884036.6
(22) Date of filing: 26.02.2014
(51) Int. Cl.: A47J 19/02, B02C 18/08

(54) **CUTTER SHAFT ASSEMBLY OF JUICER CUTTER HOLDER**

(71) Applicant: LEE, Ming-hsien, Nantun Dist. Taichung City, Taiwan (CN)
(72) Inventor: LEE, Ming-hsien, Nantun Dist. Taichung City, Taiwan (CN)
(74) Representative: Becker Kurig Straus
(86) International application number: PCT/CN2014/000178
(87) International publication number: WO 2015/127571

(57) **Abstract**

A blender blade assembly (3) and a shaft assembly (4) thereof are disclosed. The shaft assembly (4) passes through the blade assembly (3), and the blade assembly (3) is installed on a bottom of a container so as to get connected with a blender base. The shaft assembly (4) includes a shaft body (41) and a wear-resistant sleeve (42). The shaft body (41) has a trunk (411) and a stop ring (413). The stop ring (413) extends outward from a peripheral wall of the trunk (411), and is positioned in an upper segment (412a) of the trunk (411). The wear-resistant sleeve (42) is axially mounted around the trunk (411) of the shaft body (41). The wear-resistant sleeve (42) has a top edge abutting against a bottom surface of the stop ring (413) of the shaft body (41). With the wear-resistant sleeve (42) protecting the shaft body (41) from direct friction, the shaft body (41) is unlikely to be worn and damaged after long-term use, thereby ensuring watertightness.

## Description

### BACKGROUND OF THE INVENTION

### 1. Technical Field

The present invention relates to watertightness of knife shafts, and more particularly to a watertight structure applicable to a shaft assembly of a blender blade device.

### 2. Description of Related Art

The modern life makes people suffer from working pressure and lack of exercise. For maintaining a healthy condition, people tend to increase daily ingestion of cellulose and vitamins by taking fruit juice that is made through cutting and blending fresh vegetables and fruits with a blender, with the hope that quick absorption of natural nutrition helps to preserve our health.

A blender typically has a base powered by a motor, a container mounted on and operated by the base, and a blade device that is driven by the motor. The blade device is installed in the container and passes through the bottom of the container. Such a blade device usually has a downward-opened shell. The shell receives therein a bearing having an axial through hole and an oil seal having an axial through hole that are stacked vertically. The shell has its top surface formed with a through hole that is communicated with the through hole formed on the bearing and on the oil seal. A shaft body passes through the through holes. The shaft body has its upper and lower ends projecting from the top surface of the shell and the bottom surface of the bearing, respectively. An upper knife and a lower knife are mounted around the upper end section of the shaft body with the shaft body on top while a gear is mounted around the lower end section of the shaft body. The gear is operationally connected to a transmission of the motor so as to drive the upper knife and the lower knife to revolve and cut vegetables and fruits into small pieces and juice. With proper angular arrangement between the upper and lower knives, the pieces and juice of the cut vegetables and fruits can be well blended into uniform fruit juice. In the existing configuration, the shaft body directly contacts the oil seal and tends to get worn after long-term use. Conventionally, for improving watertightness, a watertight pad is arranged between the shaft body and the oil seal to prevent fruit juice from leaking. However, when the shaft body is worn after long-term use, gaps can generate between the shaft body and the watertight pad, making the watertight pad gradually lose its filling and water-blocking functions. When this happens, once the shaft body revolves at a high speed, the great fluid pressure generated by the fruit juice in the container can make the fruit juice flow along the gaps between the shaft body and the watertight pad and permeate into the blade device. This may damage the bearing and even the motor in the base. Hence, the inventor of the present invention identifies the focus of the improvement in the prior art as how to prevent the shaft body from wear and tear.

### BRIEF SUMMARY OF THE INVENTION

In view of the shortcomings of the prior art, it is the objective of the present invention to provide a shaft assembly of a blender blade device, which prevents the peripheral wall of the shaft body from directly contacting and rubbing against other objects, and in turn prevents generation of gaps between the shaft body and the watertight pad that might otherwise occur due to the worn shaft body, thereby ensuring watertightness.

In order to achieve the above and other objectives, the present invention provides a shaft assembly of a blender blade device, characterized in that: the shaft assembly penetrates the blender blade device, and the blender blade device is disposed in a blender container and penetratingly disposed at the bottom of the blender container to connect with a blender base. The shaft assembly comprises a shaft body and a wear-resistant sleeve. A stop ring is disposed at the upper segment of the shaft body and axially protrudes outward from the circumferential wall of the shaft body. The wear-resistant sleeve axially fits around the outer wall of the shaft body and has the top rim abutting against the bottom rim of the stop ring.

Regarding the shaft assembly of the blender blade device, the thickness of the sidewall of the wear-resistant sleeve equals the distance by which the stop ring protrudes from the circumferential wall of the shaft body.

Regarding the shaft assembly of the blender blade device, the top wall of the wear-resistant sleeve not only faces the shaft body but also inclines downward to slope from the outer sidewall to the inner sidewall, such that an annular space is defined jointly by the bottom surface of the stop ring, the circumferential wall of the shaft body, and the inclined top wall of the wear-resistant sleeve, thereby allowing an watertight ring to be disposed in the annular space. Since the wear-resistant sleeve fits around the outer circumferential wall of the shaft body, it is practicable to allow the wear-resistant sleeve to come into contact with an oil seal and generate friction therebetween, so as to not only lessen any damage done to the outer circumferential wall of the shaft body because of direct contact and friction but also reduce the chance of forming a gap therebetween even after long use of the shaft body, thereby waterproofing the shaft assembly. Waterproof rings are disposed between the shaft body and the oil seal to reduce the chance of forming a gap between the shaft body and the waterproof rings; hence, the waterproof rings function well.

### BRIEF DESCRIPTION OF THE SEVERAL VIEWS OF THE DRAWINGS

FIG. 1 is a perspective view of a blender blade device, a blender container and a blender base shown in the diagram are separated, according to the present invention;

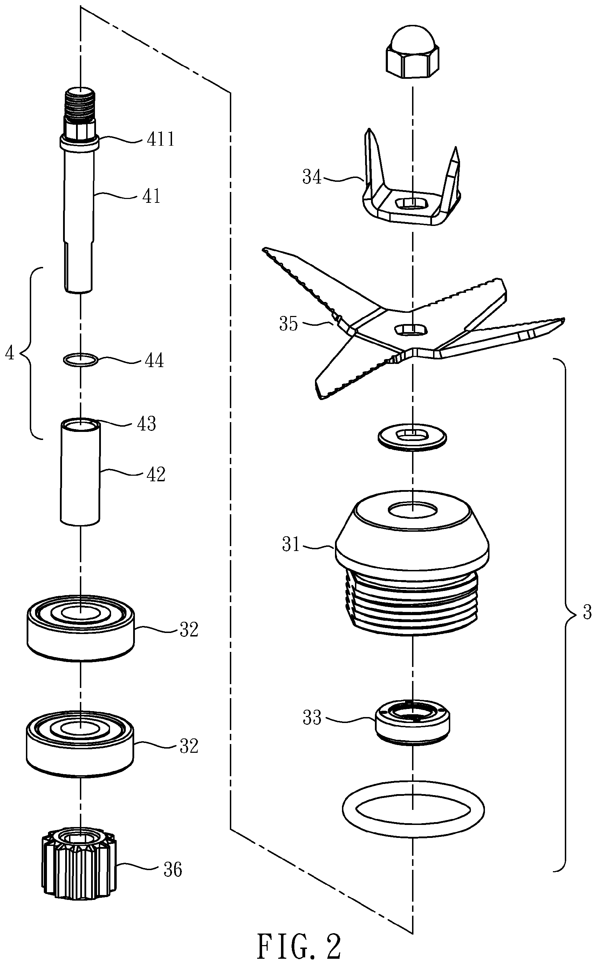

FIG. 2 is an exploded view of the blender blade device according to the present invention;

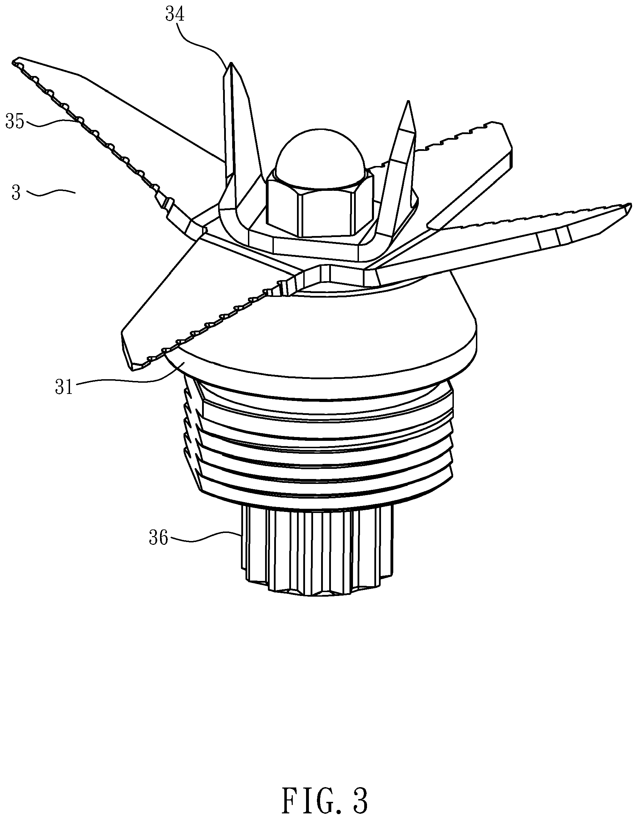

FIG. 3 is a perspective view of the blender blade device according to the present invention; and
FIG. 4 is a cross-sectional view, and a partial enlarged diagram thereof, of the blender blade device according to the present invention.

### DETAILED DESCRIPTION OF THE INVENTION

The present invention is hereunder described in terms of structures and features, illustrated with embodiments, and depicted by the accompanying drawings.

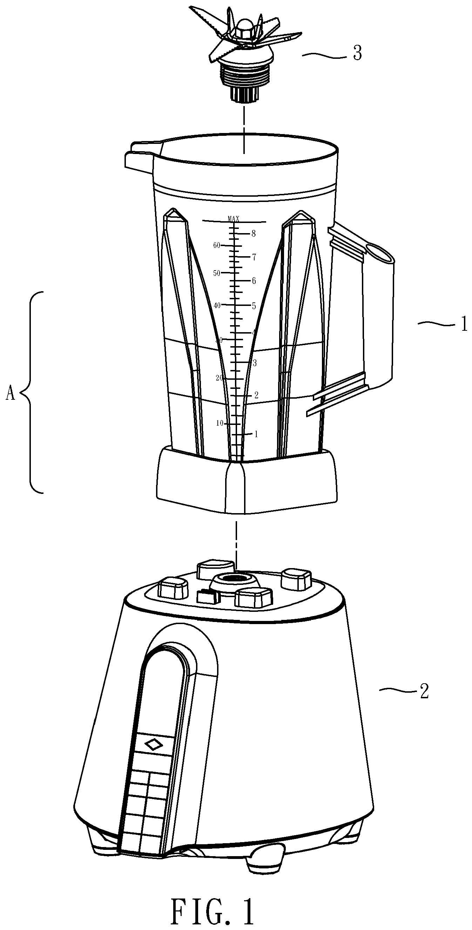

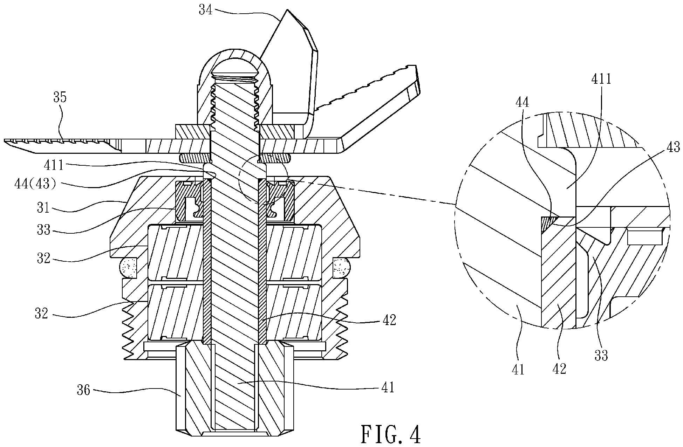

Referring to FIG. 1 and FIG. 4, a blender A essentially comprises a blender base 2, a blender container 1 and a blender blade device 3. The blender base 2 has its power supplied by a motor. The blender container 1 is operably disposed at the top of the blender base 2. The blender blade device 3 is operably connected to a transmission portion of the motor. The blender blade device 3 is disposed in the blender container 1 and penetratingly disposed at the bottom of the blender container 1. The present invention relates to a shaft assembly of a blender blade device 3. The blender blade device 3 comprises a shell 31 which opens downward. A bearing 32 with an axially-penetrating hole and an oil seal 33 with an axially-penetrating hole are sequentially stacked in a bottom-to-top manner inside the shell 31. A penetrating hole is dispose in the top wall of the shell 31 to communicate with the penetrating holes of the bearing 32 and the oil seal 33, such that the shaft assembly 4 penetrates all the penetrating holes. The upper and lower ends of the shaft assembly 4 protrude from the top wall of the shell 31 and the bottom surface of the bearing 32, respectively. An upper blade 34 and a lower blade 35 each have an axial hole which communicates with and faces the shell 31. The upper end of the shaft assembly 4 sequentially penetrates the upper blade 34 and the lower blade 35 in a top-to-bottom manner. The lower end of the shaft assembly 4 penetrates a gear 36. The gear 36 operably connects with the transmission portion of the motor to thereby drive the upper blade 34 and the lower blade 35 to rotate. The shaft assembly 4 comprises a shaft body 41 and a wear-resistant sleeve 42. A stop ring 411 is disposed at the upper segment of the shaft body 41 and axially protrudes outward from the circumferential wall of the shaft body 41. The wear-resistant sleeve 42 is axially fitted around the outer wall of the shaft body 41. The top rim of the wear-resistant sleeve 42 abuts against the bottom rim of the stop ring 411. The thickness of the sidewall of the wear-resistant sleeve 42 equals the distance by which the stop ring 411 protrudes from the circumferential wall of the shaft body 41. In a preferred embodiment, the top wall of the wear-resistant sleeve 42 not only faces the shaft body 41 but also inclines downward to slope from the outer sidewall to the inner sidewall. An annular space 43 is defined jointly by the bottom surface of the stop ring 411, the circumferential wall of the shaft body 41, and the inclined top wall of the wear-resistant sleeve 42. A watertight ring 44 is disposed in the annular space 43. Two waterproof rings are disposed above and below the inner circumferential wall of the oil seal 33, extended toward the shaft body 41, and snugly fitted to the outer circumferential wall of the wear-resistant sleeve 42, so as to prevent liquid from passing the wear-resistant sleeve 42 and thus seeping into the blender blade device 3.

Since the wear-resistant sleeve 42 fits around the outer circumferential wall of the shaft body 41, the wear-resistant sleeve 42 has to be made of a wear-resistant or high-rigidity material. In this embodiment, the wear-resistant sleeve 42 is made of SUS440C stainless steel, whereas the shaft body 41 is made of SUS303 stainless steel, with a view to lessening any damage done to the outer circumferential wall of the shaft body 41 because of direct contact and friction; hence, with the wear-resistant sleeve 42 being wear-resistant and the shaft body 41 being immune to friction-induced damage, the shaft body 41 is unlikely to get spaced apart from the waterproof rings even after long use of the shaft body 41, thereby waterproofing the shaft assembly 4. Furthermore, since the thickness of the sidewall of the wear-resistant sleeve 42 equals the distance by which the stop ring 411 protrudes from the circumferential wall of the shaft body 41, it is not necessary to manufacture the other components of the blender blade device 3 in order for the blender blade device 3 to match the shaft assembly 4, thereby incurring no additional production cost. Moreover, the watertight ring 44 achieves a waterproof purpose by stopping the advance of a liquid seeping along the shaft body 41.

In conclusion, the present invention has high industrial applicability, has never been published or openly used before the filing of this patent application, has never been disclosed to the general public, and has non-obviousness. Hence, the present invention meets all the requirements of patentability.

The present invention is described above and illustrated with a preferred embodiment. All equivalent changes made to the preferred embodiment of the present invention should fall within the scope of the present invention as set forth in the appended claims.

## Claims

1. A shaft assembly (4) of a blender blade device (3), **characterized in that**: the shaft assembly (4) penetrates the blender blade device (3), and the blender blade device (3) is disposed in a blender container (1) and penetratingly disposed at a bottom of the blender container (1) to connect with a blender base (2), the shaft assembly(4) comprising:
a shaft body (41), wherein a stop ring (411) is disposed at an upper segment of the shaft body (41) and axially protrudes outward from a circumferential wall of the shaft body (41); and
a wear-resistant sleeve(42), axially fitted around an outer wall of the shaft body (41) and having a top edge abutting against a bottom edge of the stop ring (411).

2. The shaft assembly (4) of claim 1, **characterized in that**: a thickness of a sidewall of the wear-resistant sleeve (42) equals a distance by which the stop ring (411) protrudes from the circumferential wall of the shaft body (41).

3. The shaft assembly (4) of claim 1, **characterized in that**: a top wall of the wear-resistant sleeve (42) not only faces the shaft body (41) but also inclines downward to slope from the outer sidewall to the inner sidewall, such that an annular space (43) is defined jointly by the bottom surface of the stop ring (411), the circumferential wall of the shaft body (41), and the inclined top wall of the wear-resistant sleeve (42), thereby allowing a watertight ring (44) to be disposed in the annular space (43).
